# EUROPEAN PATENT SPECIFICATION

(11) **EP 3 961 125 B1**
(45) Date of publication and mention of the grant of the patent: **21.02.2024**
(21) Application number: 19926057.1
(22) Date of filing: 30.12.2019
(51) Int. Cl.: F25B 13/00, F25B 47/02, F24F 11/00, F24F 110/12, F24F 11/42, F24F 11/61, F24F 11/83, F24F 11/86, F24F 11/871

(54) **CONTROL METHOD FOR HEAT PUMP SYSTEM**
VERFAHREN ZUR STEUERUNG EINER WÄRMEPUMPENANLAGE
PROCÉDÉ DE COMMANDE POUR SYSTÈME DE POMPE À CHALEUR

(30) Priority: 26.04.2019 CN 201910344928
(43) Date of publication of application: 02.03.2022
(73) Proprietor: Gree Electric Appliances, Inc. of Zhuhai, Zhuhai, Guangdong 519070 (CN)
(72) Inventor: CHEN, Jiao, Zhuhai, Guangdong 519070 (CN); HE, Zhenjian, Zhuhai, Guangdong 519070 (CN); LIN, Jinhuang, Zhuhai, Guangdong 519070 (CN); FENG, Qinglong, Zhuhai, Guangdong 519070 (CN); QIN, Xiaoke, Zhuhai, Guangdong 519070 (CN); DAI, Zhiwei, Zhuhai, Guangdong 519070 (CN)
(74) Representative: Zacco GmbH
(86) International application number: PCT/CN2019/129765
(87) International publication number: WO 2020/215787

(56) References cited:
- CN-A- 101 140 122
- CN-A- 106 352 629
- CN-A- 107 166 639
- CN-A- 108 036 557
- CN-A- 109 114 748
- CN-A- 109 237 730
- CN-A- 109 323 477
- CN-A- 109 386 982
- CN-A- 109 386 982
- CN-B- 104 819 610
- CN-U- 204 757 488
- CN-Y- 201 104 063
- JP-A- 2009 287 903
- US-A- 5 839 292

## Description

### Technical Field

The invention relates to the technical field of a heat pump system, and in particular to a control method of a heat pump system.

### Background

When a heat pump air conditioner heats at a low temperature, the problem that the indoor temperature may fluctuate largely and thus making people uncomfortable may be caused as a result of influence of frosting and defrosting. Therefore, various means have been taken in the related art, to reduce the influence of defrosting on the indoor temperature.

There is an air conditioner in the related art, and an indoor heat exchanger is divided into two parts (a first indoor heat exchanger and a second indoor heat exchanger). A four-way valve defrosts in a reverse manner when an outdoor side needs to defrost. A high-temperature refrigerant, after passing an outdoor heat exchanger, flows through the second indoor heat exchanger first, and flows through an expansion valve and the first indoor heat exchanger sequentially, in this way heat is provided to the indoor side during defrosting.

In the related art, defrosting control is mostly adopted to reduce adverse effect of frosting of the outdoor heat exchanger on the performance of the air conditioner. However, because the outdoor heat exchanger has a high frosting frequency, a defrosting frequency is high in a low-temperature and high-humidity heating environment, thereby leading to a short frosting period when the air conditioner operates. In this way, indoor continuous heating time is short, and people are less comfortable during heating.

In addition, a patent document with publication number CN 109386982 discloses: the invention provides an air conditioner and a control method thereof. The air conditioner comprises: a compressor (1), an indoor heat exchanger (2), a throttling device (3), a first by-pass line (4), an outdoor heat exchanger (5), wherein the throttling device (3) is arranged on a pipeline between the indoor heat exchanger (5), a first end of the first by-pass line (4) is connected to the outdoor heat exchanger (5), the first by-pass line (4) is used for conveying a high-temperature refrigerant to the outdoor heat exchanger (5), and a first control value is used for controlling the on-off state of the first by-pass line (4). According to the air conditioner, the defrosting cycle of the air conditioner can be prolonged, the defrosting time of the air conditioner can be shortened, and the indoor comfort can be improved.

In addition, a patent document with publication number CN 107166639 A discloses: the invention provides an air-conditioner defrosting control method. The air-conditioner defrosting control method comprises the following steps that when the outdoor environmental temperature is higher than 0 DEG C and lower than 5 DEG C, an air-conditioner works in a heating mode, and whether defrosting conditions are met or not is judged; if the defrosting conditions are met, the air-conditioner enters a defrosting mode, the defrosting mode is that a frequency of a compressor is controlled to be a defrosting frequency, and meanwhile, an aperture of an electronic expansion valve is controlled to be a defrosting aperture to enable the surface temperature of an outdoor heat exchanger to be kept at 0 DEG C; and the defrosting frequency is lower than the real-time operational frequency of the compressor in the heating mode, the defrosting aperture is larger than the real-time aperture of the electronic expansion valve in the heating mode, and the air-conditioner keeps operating the defrosting mode till the situation that an exit condition is met is judged. Meanwhile, an air-conditioner defrosting control device and an air-conditioner are further disclosed. According to the air-conditioner defrosting control method, switching between the heating mode and a refrigeration mode is not needed in the defrosting process, defrosting is conducted by using air heat, and the air-conditioner defrosting control method has the advantages that energy consumption is low, and user experience is good.

### Summary

In order to solve the abovementioned problem, the invention provides a control method of a heat pump system as defined by appended independent claim 1. The heat pump system includes a compressor, an indoor heat exchanger, a first throttling device, a second throttling device, a bypass pipe and an outdoor heat exchanger, a second pipe is connected to the indoor heat exchanger through the bypass pipe, a first pipe is connected to the indoor heat exchanger through a main flow path, the first throttling device is arranged on a main flow path between the first pipe and the indoor heat exchanger, the second throttling device is arranged on the bypass pipe, an first pipe flow path is formed by the first pipe and the main flow path, the first pipe flow path is in parallel connection with the bypass pipe and then in serial connection with the second pipe. The control method includes the following steps:
operating parameters of the heat pump system are acquired;
whether a control condition of entering into delayed frosting is reached is judged;
a degree of opening of the first throttling device and/or the second throttling device is controlled to increase when the control condition of entering into delayed frosting is reached.

In an embodiment, the control condition of entering into delayed frosting includes the following parameters:
1) an outdoor ambient temperature is greater than or equal to 0°C, and less than or equal to T1;
2) a temperature of the outdoor heat exchanger is less than or equal to T2;
3) a current operating frequency of the compressor is greater than or equal to f1.

In an embodiment, the step that the degree of opening of the first throttling device and/or the second throttling device is controlled to increase when the control condition of entering into delayed frosting is reached includes the following steps:
an operating frequency of the compressor is reduced to f2;
the degree of opening of the second throttling device is adjusted to P1;
the degree of opening of the first throttling device is kept unchanged.

In an embodiment, the step that the degree of opening of the first throttling device and/or the second throttling device is controlled to increase when the control condition of entering into delayed frosting is reached includes the following steps:
the operating frequency of the compressor is reduced to f3;
the degree of opening of the first throttling device is adjusted to P3;
the degree of opening of the second throttling device is adjusted to P4.

In an embodiment, the step that the degree of opening of the first throttling device and/or the second throttling device is controlled to increase when the control condition of entering into delayed frosting is reached further includes the following step:
auxiliary electric heating is started on an indoor side.

In an embodiment, the step that the degree of opening of the first throttling device and/or the second throttling device is controlled to increase when the control condition of entering into delayed frosting is reached further includes the following steps:
a rotation speed of an indoor fan is adjusted according to a temperature of the indoor heat exchanger that is acquired currently;
a current maximum allowable rotation speed of the indoor fan is set to a rotation speed of the indoor fan that is set currently during adjusting the rotation speed of the indoor fan, and a minimum rotation speed of the indoor fan is set to V1.

In an embodiment, the step that the degree of opening of the first throttling device and/or the second throttling device is controlled to increase when the control condition of entering into delayed frosting is reached further includes the following step:
a rotation speed of an outdoor fan is increased to V2.

In an embodiment, the step that the degree of opening of the first throttling device and/or the second throttling device is controlled to increase when the control condition of entering into delayed frosting is reached further includes the following steps:
the outdoor fan is controlled to operate for t5 at a rotation speed V3 in a first rotation direction;
the outdoor fan is stopped;
the outdoor fan is controlled to operate reversely at a rotation speed V4 in a second rotation direction.

In an embodiment, the step that the degree of opening of the first throttling device and/or the second throttling device is controlled to increase when the control condition of entering into delayed frosting is reached further includes the following step:
the rotation speed of the outdoor fan is increased to V5.

In an embodiment, the step that the degree of opening of the first throttling device and/or the second throttling device is controlled to increase when the control condition of entering into delayed frosting is reached further includes the following steps:
an outdoor fan is controlled to operate for t8 at a rotation speed V6 in the first rotation direction;
the outdoor fan is stopped;
the outdoor fan is controlled to operate reversely at a rotation speed V7 in the second rotation direction.

In an embodiment, the control method further includes the following steps:
whether the condition of exiting delayed frosting control is satisfied is detected;
the heat pump system is controlled to exit the delayed frosting control in a case that the condition of exiting delayed frosting control is satisfied.

In an embodiment, the condition of exiting delayed frosting control includes one of the following:
a temperature of the outdoor heat exchanger is greater than or equal to T3;
a period of time of the delayed frosting control is greater than or equal to t2.

In an embodiment, the control method further includes a step that the delayed frosting control is exited. The step that the delayed frosting control is exited includes the following steps:
the degree of opening of the second throttling device is controlled to be adjusted to P2;
a current degree of opening of the first throttling device is controlled to keep unchanged;
the heat pump system is controlled to operate according to normal heating logic after t4.

In an embodiment, the control method further includes a step that the delayed frosting control is exited. The step that the delayed frosting control is exited includes the following step:
the outdoor fan is controlled to operate according to normal heating logic after controlling the outdoor fan to operate for t3.

In an embodiment, the control method further includes a step that the delayed frosting control is exited. The step that the delayed frosting control is exited includes the following steps:
the outdoor fan is stopped after being controlled to operate for t6 in the second rotation direction;
the outdoor fan is controlled to operate in the first rotation direction, and controlled to operate according to normal heating logic.

In an embodiment, the control method further includes a step that the delayed frosting control is exited. The step that the delayed frosting control is exited includes the following steps:
the first throttling device is controlled to operate according to normal heating logic;
the degree of opening of the second throttling device is controlled to P5.

In an embodiment, the control method further includes a step that the delayed frosting control is exited. The step that the delayed frosting control is exited includes the following step: the outdoor fan is controlled to operate according to normal heating logic after controlling the outdoor fan to operate for t7.

In an embodiment, the control method further includes a step that the delayed frosting control is exited. The step that the delayed frosting control is exited includes the following steps:
the outdoor fan is stopped after being controlled to operate for t9 in the second rotation direction;
the outdoor fan is controlled to operate in the first rotation direction, and controlled to operate according to normal heating logic.

In an embodiment, the control condition of entering into delayed frosting further includes as follows: Continuous heating operating time is greater than or equal to t1.

### Brief Description of the Drawings

Fig. 1 is a structural schematic diagram of a heat pump system of an embodiment of the invention as defined by appended independent claim 1.
Fig. 2 is a flow chart of a control method of the heat pump system of an embodiment of the invention as defined by appended independent claim 1.
Fig. 3 is a condition of entering into and exiting delayed frosting control of the heat pump system of an embodiment of the invention as defined by appended independent claim 1.
Fig. 4 is a flow chart of a delayed frosting control method of the heat pump system of an embodiment.
Fig. 5 is a flow chart of a method of exiting delayed frosting control of the heat pump system of an embodiment.
Fig. 6 is a flow chart of a delayed frosting control method of the heat pump system of an embodiment.
Fig. 7 is a flow chart of a method of exiting delayed frosting control of the heat pump system of an embodiment.
Fig. 8 is a flow chart of a delayed frosting control method of the heat pump system of an embodiment.
Fig. 9 is a flow chart of a method of exiting delayed frosting control of the heat pump system of an embodiment.
Fig. 10 is a flow chart of a delayed frosting control method of the heat pump system of an embodiment.
Fig. 11 is a flow chart of a method of exiting delayed frosting control of the heat pump system of an embodiment.

The drawings are represented by the following reference numbers.
1. Compressor; 2. Indoor heat exchanger; 3. First throttling device; 4. Bypass pipe; 5. Outdoor heat exchanger; 6. Second throttling device; 7. Gas-liquid separator; 8. Four-way valve; 9. Second pipe; 10. First pipe; 11. Connecting pipe; 12. Branch; 13. Supercooling pipe

### Detailed Description of the Embodiments

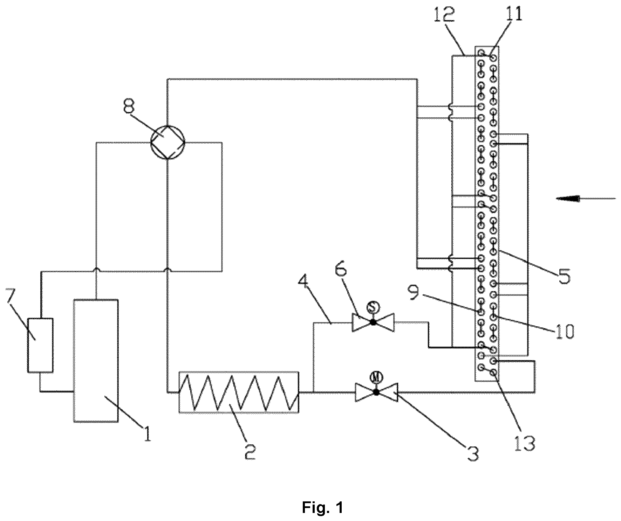

A direction of arrow in Fig. 1 is an air flow direction.

In combination with Fig. 1, according to an embodiment of the invention as defined by appended independent claim 1, a heat pump system inter alia includes a compressor 1, an indoor heat exchanger 2, a first throttling device 3, a second throttling device 6, a bypass pipe 4 and an outdoor heat exchanger 5, a second pipe 9 being connected to the indoor heat exchanger 2 through the bypass pipe 4, a first pipe 10 being connected to the indoor heat exchanger 2 through a main flow path, the first throttling device 3 being arranged on a main flow path between the first pipe 10 and the indoor heat exchanger 2, the second throttling device 6 being arranged on the bypass pipe 4, an first pipe 10 flow path being formed by the first pipe 10 and the main flow path, and the first pipe 10 flow path being in parallel connection with the bypass pipe 4 and then in serial connection with the second pipe 9.

The heat pump system further includes a gas-liquid separator 7, and the gas-liquid separator 7 is arranged on a return gas end of the compressor 1. When connection of the bypass pipe 4 is controlled through the second throttling device 6, a high-temperature refrigerant directly enters into the outdoor heat exchanger 5 through the bypass pipe 4, as to defrost the outdoor heat exchanger 5. After the refrigerant defrosts, there is much liquid refrigerant. Gas-liquid separation is implemented for the refrigerant flowing back to the compressor 1 through arranging the gas-liquid separator 7, in this way a liquid impact phenomenon of the liquid refrigerant entering into the return gas end of the compressor 1 is prevented, the return gas end is an end where refrigerant gas enters.

The heat pump system further includes a four-way valve 8, and four interfaces of the four-way valve 8 are connected to the indoor heat exchanger 2, the outdoor heat exchanger 5 and an exhaust end and the return gas end of the compressor 1, respectively.

The outdoor heat exchanger 5 includes multiple rows of heat exchanging pipes, the multiple rows of heat exchanging pipes includes the first pipes 10 close to an air inlet side and the second pipes 9 far away from the air inlet side. The multiple rows of heat exchanging pipes are divided into multiple groups of pipe groups that are arranged in parallel, the second pipe 9 and the first pipe 10 that are positioned in the same pipe group are in serial connection through a connecting pipe 11, and the bypass pipe 4 is in connection with the connecting pipe 11. In an embodiment, the outdoor heat exchanger 5 includes two rows of heat exchangers, namely, one row of second pipes 9 and one row of first pipes 10. The second pipes 9 and the first pipes 10 are divided into four pipe groups, and each pipe group includes the second pipes 9 and the first pipes 10 with the same or similar quantity, in this way four heat exchanging pipe groups that are in parallel connection are formed.

The outdoor heat exchanger 5 further includes a supercooling pipe 13, and the first throttling device 3 is in connection with the pipe group through the supercooling pipe 13. The supercooling pipe 13 supercools the heat exchanging pipe groups, in this way the heat exchanging efficiency of the outdoor heat exchanger 5 is improved.

A second end of the second throttling device 6, a second end of the first throttling device 3 and a second end of the bypass pipe 4 are connected to an end of the indoor heat exchanger 2 close to the first throttling device 3. In an embodiment, one bypass pipe 4 and one second throttling device 6 are additively arranged on an original system only, herein the second throttling device 6 is in parallel connection with the first throttling device 3, one end of the second throttling device 6 is in connection with the indoor heat exchanger 2, and another end is divided into four branches 12. The branches 12 are in connection with corner connecting pipes 11 of an original branch through a three-way pipe one by one.

The first throttling device 3 and the second throttling device 6 are throttling devices with adjustable degree of opening. In an embodiment, both the first throttling device 3 and the second throttling device 6 are electronic expansion valves.

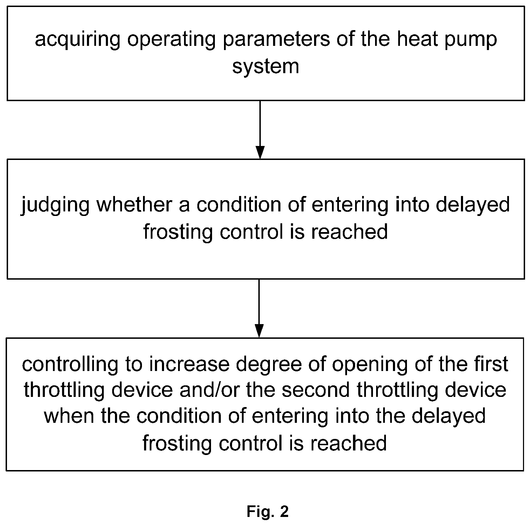

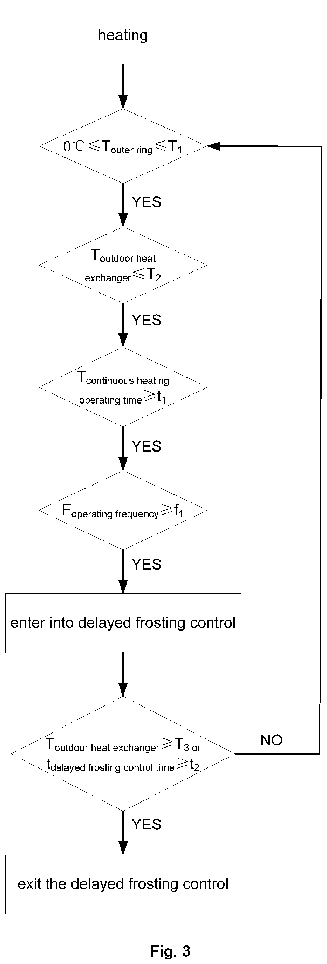

In combination with Fig. 2 to Fig. 11, according to the embodiment, operating parameters of the heat pump system are acquired, whether a control condition of entering into delayed frosting is reached is judged, and a degree of opening of the first throttling device 3 and/or the second throttling device 6 is controlled to increase when the control condition of entering into delayed frosting is reached.

When the heat pump system is heating, an amount of a refrigerant of entering into the outdoor heat exchanger 5 is increased through increasing the degree of opening of the first throttling device 3 and/or the second throttling device 6 in a case that the heat pump system reaching the control condition of entering into delayed frosting is detected, in this way a heat absorption capacity of the outdoor heat exchanger 5 is increased, a temperature of a coil of the outdoor heat exchanger 5 is improved, and accordingly the temperature of the coil of the outdoor heat exchanger 5 is higher than a frosting temperature. Thus, frosting on a surface of the outdoor heat exchanger 5 is effectively avoided, or a frosting speed on the surface of the outdoor heat exchanger 5 is delayed, indoor continuous heating is realized, a frosting period of the outdoor heat exchanger 5 is greatly prolonged, indoor continuous heating time is prolonged, and it is more comfortable to stay indoor during heating.

The control condition of entering into delayed frosting includes: 1) an outdoor ambient temperature is greater than or equal to 0°C, and less than or equal to T1, 2) a temperature of the outdoor heat exchanger 5 is less than or equal to T2, and 3) a current operating frequency of the compressor 1 is greater than or equal to f1.

When the outdoor ambient temperature is greater than or equal to 0°C, and less than or equal to T1, the outdoor heat exchanger 5 is in a frosting critical state at this moment. If the heat pump system is not processed and is operated according to original heating control logic, it is likely to frost. Under this condition, whether the temperature of the outdoor heat exchanger 5 reaches a frosting temperature is detected, namely, whether the temperature of the outdoor heat exchanger 5 is less than or equal to T2, and T2 here is a frosting temperature of the outdoor heat exchanger 5. When the temperature of the outdoor heat exchanger 5 is less than or equal to T2, the surface of the outdoor heat exchanger 5 frosts. At this moment, that the current operating frequency of the compressor 1 is greater than or equal to f1 needs to be judged because the compressor 1 operates at a low frequency and frequency reduction cannot be implemented for the compressor 1 if the operating frequency of the compressor 1 is less than f1 under a condition that the abovementioned conditions are satisfied. In this case, if the heat pump system is forced to enter into a delayed frosting control program, due to the fact that the frequency of the compressor 1 cannot be adjusted any longer, the degree of opening of the first throttling device 3 and/or the second throttling device 6 is adjusted separately, so that an indoor ambient temperature changes, a preset temperature cannot reach, and the delayed frosting control is not achieved. Therefore, when the operating frequency of the compressor 1 is less than f1, there is no need to enter into the delayed frosting control program, and the outdoor heat exchanger 5 is defrosted according to subsequent defrosting control.

In an embodiment, the control condition of entering into delayed frosting further includes: continuous heating operating time is greater than or equal to t1. In an initial heating operating stage or a certain heating operating stage of the heat pump system, the temperature of the outdoor heat exchanger 5 is temporarily less than or equal to T2. The duration of this phenomenon is short, and the surface of the outdoor heat exchanger 5 does not frost. At this moment, the heat pump system enters into a delayed frosting control stage according to the abovementioned judgment condition, thereby leading to reduction of operating performance of the heat pump system. Therefore, the continuous heating operating time of the heat pump system needs to be detected, as to avoid occurrence of the abovementioned situation and prevent incorrect judgment. Accordingly the heat pump system is prevented from entering into the delayed frosting control by mistake when there is no need to enter into the delayed frosting control, and accuracy and a reliability of the abovementioned control method are improved.

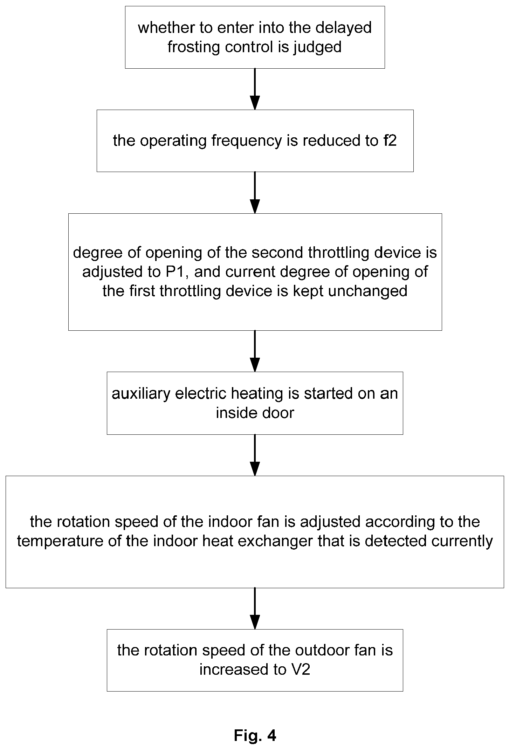

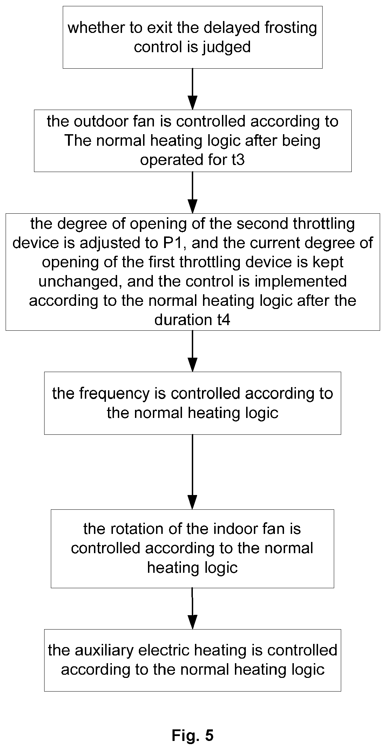

In combination with Fig. 4 and Fig. 5, according to an embodiment, the step that the degree of opening of the first throttling device 3 and/or the second throttling device 6 is controlled to increase when the control condition of entering into delayed frosting is reached includes: an operating frequency of the compressor 1 is reduced to f2, the degree of opening of the second throttling device 6 is adjusted to P1, and the degree of opening of the first throttling device 3 is kept unchanged.

When the degree of opening of the second throttling device 6 is adjusted to P1, the degree of opening of the second throttling device 6 is increased at this moment, an amount of the refrigerant entering into the second pipe 9 of the outdoor heat exchanger 5 is increased, in this way the heat absorption capacity of the second pipe 9 is increased. At this moment, a heat exchange amount of the indoor heat exchanger 2 is increased, the indoor ambient temperature rises. To keep the indoor ambient temperature stable, the operating frequency of the compressor 1 needs to be reduced, in this way a reduction of the operating frequency of the compressor 1 fits an increase of the amount of the refrigerant of the second pipe 9 of the outdoor heat exchanger 5, and accordingly a flow rate of the refrigerant of the outdoor heat exchanger 5 is increased and the operating frequency of the compressor 1 is reduced, so that the indoor temperature is kept at the preset temperature, and comfort of a user is improved. Under this condition, the degree of opening of the first throttling device 3 in normal heating control logic is still kept unchanged.

The step that the degree of opening of the first throttling device 3 and/or the second throttling device 6 is controlled to increase when the control condition of entering into delayed frosting is reached further includes: auxiliary electric heating is started on an indoor side. When entering into the delayed frosting control, if the outdoor ambient temperature is too low, the amount of the refrigerant of the outdoor heat exchanger 5 is increased, and the operating frequency of the compressor 1 is reduced at the same time, so that only the temperature of the outdoor heat exchanger 5 is guaranteed to rise. When the operating frequency of the compressor 1 is reduced greatly and the degree of opening of the second throttle device 6 is limited, a reduction of the indoor ambient temperature is caused if heat absorption of the outdoor heat exchanger 5 does not fit the reduction of the operating frequency of the compressor 1. Therefore, the auxiliary electric heating is started on the indoor side at this moment, in this way the indoor ambient temperature is more effectively improved in an auxiliary manner, and accordingly the indoor ambient temperature is kept constant.

The step that the degree of opening of the first throttling device 3 and/or the second throttling device 6 is controlled to increase when the control condition of entering into delayed frosting is reached further includes: a rotation speed of an indoor fan is adjusted according to a temperature of the indoor heat exchanger 2 that is acquired currently, and a current maximum allowable rotation speed of the indoor fan is set to the rotation speed of the indoor fan that is set currently during adjusting the rotation speed of the indoor fan, and a minimum rotation speed of the indoor fan is set to V1. During the delayed frosting control, heat absorption requirement of the outdoor heat exchanger 5 is reduced through reducing the heat exchanging amount of the indoor heat exchanger 2. At this moment, a requirement of the heat absorption capacity of the refrigerant is reduced. When the amount of the refrigerant is increased, needed heat absorption capacity is reduced because the heat absorption capacity is increased. Therefore, the temperature of the outdoor heat exchanger 5 is effectively improved, in this way the outdoor heat exchanger 5 defrosts, and a frosting speed of the outdoor heat exchanger 5 is delayed. The rotation speed of the indoor fan that is set currently is set to the maximum rotation speed of the indoor fan during adjustment, in this way the problem that the frosting speed is sped up because an amount of heat needed by the outdoor heat exchanger 5 is increased as a result of an error of adjusting the rotation speed of the indoor fan is effectively avoided.

The step that the degree of opening of the first throttling device 3 and/or the second throttling device 6 is controlled to increase when the control condition of entering into delayed frosting is reached further includes: a rotation speed of an outdoor fan is increased to V2. Through improving the rotation speed of the outdoor fan, heat exchanging of the outdoor heat exchanger 5 and the outside is improved, a heat absorption efficiency is improved, and accordingly the temperature of the outdoor heat exchanger 5 is improved, and the frosting of the outdoor heat exchanger 5 is effectively delayed.

The control method further includes: whether a condition of exiting delayed frosting control is satisfied is detected, and the heat pump system is controlled to exit the delayed frosting control in a case that the condition of exiting delayed frosting control is satisfied. The heat pump system is controlled to exit the delayed frosting control when the delayed frosting control reaches a certain condition, in this way the heat pump system is prevented from operating with a low working efficiency for a long time.

In an embodiment, the condition of exiting delayed frosting control includes one of the following: a temperature of the outdoor heat exchanger 5 is greater than or equal to T3, and a period of time of the delayed frosting control is greater than or equal to t2. When the temperature of the outdoor heat exchanger 5 is greater than or equal to T3, the temperature of the outdoor heat exchanger 5 is higher than the frosting temperature at this moment. Therefore, the defrosting on the surface of the outdoor heat exchanger 5 is effectively realized, and the frosting of the outdoor heat exchanger 5 is avoided. At this moment, there is no risk of frosting on the outdoor heat exchanger 5, so that the delayed frosting control program is exited.

In addition, under a condition that the period of time of the delayed frosting control is greater than or equal to t2, if the temperature of the outdoor heat exchanger 5 is still not improved to the preset temperature, it shows that the current delayed frosting control method cannot effectively play a role of delaying the frosting. Therefore, there is no need to continue an invalid delay frost control, the heat pump system is directly controlled to operate according to the normal heating control logic, and the heat pump system is controlled to defrost upon reaching the defrosting condition.

The control method further includes a step that the delayed frosting control is exited. The step that the delayed frosting control is exited includes: the degree of opening of the second throttling device 6 is controlled to be adjusted to P2, a current degree of opening of the first throttling device 3 is controlled to keep unchanged, and the heat pump system is controlled to operate according to normal heating logic after t4. After the step that the delayed frosting control is exited, the degree of opening of the second throttling device 6 is reduced first, and the heat pump system operates for t4, in this way a flow rate of the refrigerant is slowly reduced rather than suddenly reduced. Accordingly, an operating stability of the heat pump system is improved. After t4, the heat pump system is controlled according to the normal heating logic, as to heat the indoor.

The control method further includes a step that the delayed frosting control is exited. The step that the delayed frosting control is exited includes: the outdoor fan is controlled to operate according to the normal heating logic after controlling the outdoor fan to operate for t3.

A specific control process of the heat pump system in an embodiment is as follows:
when it is judged to enter into the delayed frosting control, the operating frequency of the compressor 1 is reduced to f2, degree of opening of a bypass electronic expansion valve is adjusted to P1, and current degree of opening of a throttling electronic expansion valve is kept unchanged. Auxiliary electric heating is started on the indoor side. The rotation speed of the indoor fan is adjusted according to the temperature of the indoor heat exchanger 2 that is detected currently, and the current maximum allowable rotation speed of the indoor fan is the rotation speed of the indoor fan that is set currently, and the minimum rotation speed is set to V1. The rotation speed of the outdoor fan is increased to V2;
when it is judged to exit the delayed frosting control, the outdoor fan is controlled according to the normal heating logic after controlling the outdoor fan to operate for t3. The degree of opening of the bypass electronic expansion valve is adjusted to P2, the current degree of opening of the throttling electronic expansion valve is kept unchanged, and the heat pump system is controlled to operate according to the normal heating logic after the duration t4. The frequency, the rotation of the indoor fan and the auxiliary electric heating are controlled according to the normal heating logic;
when it is judged to enter into the delayed frosting control, the frequency of the compressor 1 is reduced, in this way the temperature of the outdoor heat exchanger 5 is increased to 0°C and above. At this moment, a melting temperature of a frost layer has been reached. On the other hand, the outdoor ambient temperature during the delayed frosting control is greater than or equal to 0°C, in this way melting of the frost is sped up by virtue of heat of the outdoor ambient temperature. The bypass electronic expansion valve is opened, in this way the high-temperature refrigerant flows through an indoor coil and an outdoor coil of the outdoor heat exchanger 5, and melting of the frost layer is sped up. During the delayed frosting control, the auxiliary electric heating is started, in this way it is guaranteed to be comfortable to stay indoor during heating. The rotation speed of the indoor fan is adjusted according to the temperature of the indoor heat exchanger 2, on one hand, enough heat is guaranteed to melt the frost layer, and on the other hand, the heat is continuously provided to the indoor side. While through increasing the rotation speed of the outdoor fan, water generated after melting of the frost layer is blown off a fin quickly.

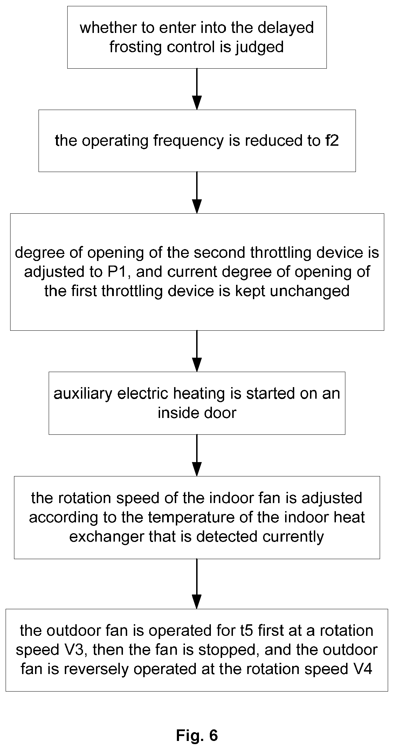

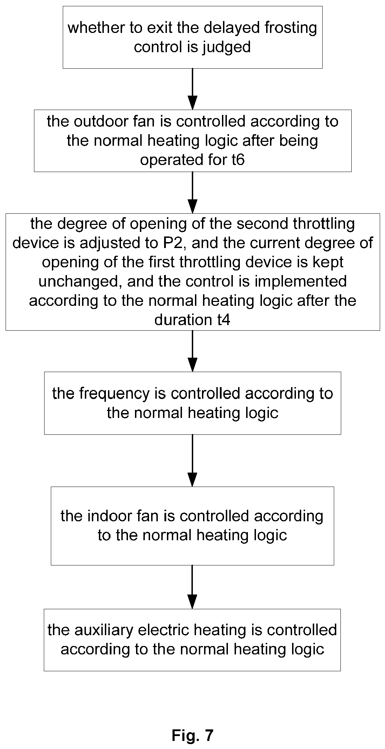

In combination with Fig. 6 and Fig. 7, in an embodiment, the step that the degree of opening of the first throttling device 3 and/or the second throttling device 6 is controlled to increase when the control condition of entering into delayed frosting is reached further includes: the outdoor fan is controlled to operate for t5 at a rotation speed V3 in a first rotation direction, the outdoor fan is stopped, and the outdoor fan is controlled to operate reversely at a rotation speed V4 in a second rotation direction.

In an embodiment, when the outdoor fan is controlled, the outdoor fan is controlled first to operate for t5 in the first rotation direction, in this way the frost on the surface of the outdoor heat exchanger 5 is completely melted, then the outdoor fan is stopped, and the outdoor fan is controlled to operate reversely at the rotation speed V4 along in the second rotation direction, in this way water drops formed by the melted frost on the surface of the outdoor heat exchanger 5 is effectively blown off a surface of the fin of the outdoor heat exchanger 5, and accordingly there is no condensed water retained on the surface of the outdoor heat exchanger 5. Therefore, the outdoor heat exchanger 5 is not easily subjected to frosting any longer.

In an embodiment, the control method further includes a step that the delayed frosting control is exited. The step that the delayed frosting control is exited includes: the outdoor fan is stopped after being controlled to operate for t6 in the second rotation direction, the outdoor fan is controlled to operate in the first rotation direction, and the outdoor fan is controlled to operate according to the normal heating logic.

A specific control process of the heat pump system in an embodiment is as follows:
when it is judged to enter into the delayed frosting control, the operating frequency of the compressor 1 is reduced to f2, the degree of opening of the bypass electronic expansion valve is adjusted to P1, and the current degree of opening of the throttling electronic expansion valve is kept unchanged. The auxiliary electric heating is started on an indoor side. The rotation speed of the indoor fan is adjusted according to the temperature of the indoor heat exchanger 2 that is detected currently, and the maximum rotation speed is the rotation speed that is set currently, and the minimum rotation speed is set to V1. The outdoor fan is operated for t5 first at a rotation speed V3, then the outdoor fan is stopped, and the outdoor fan is reversely operated at the rotation speed V4;
when it is judged to exit the delayed frosting control, the outdoor fan is stopped after being controlled to operate for t6, and then the outdoor fan is controlled according to the normal heating logic. The degree of opening of the bypass electronic expansion valve is adjusted to P2, the current degree of opening of the throttling electronic expansion valve is kept unchanged, and the heat pump system is controlled to operate according to the normal heating logic after the duration t4. The frequency, the rotation of the indoor fan and the auxiliary electric heating are controlled according to the normal heating logic.

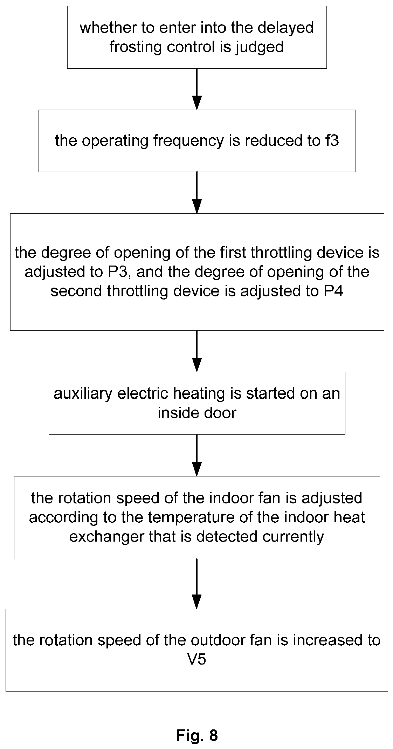

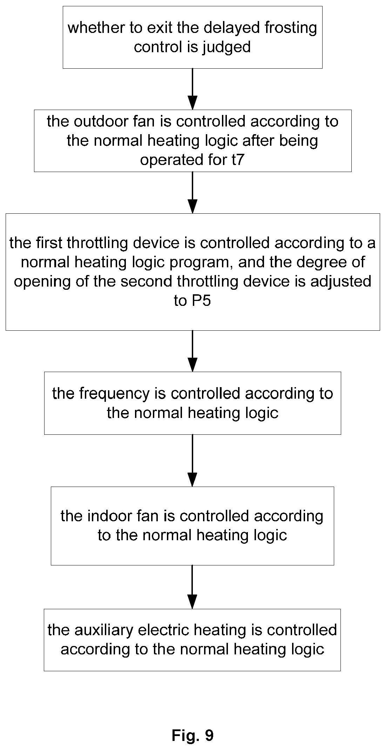

In combination with Fig. 8 and Fig. 9, according to an embodiment, the step that the degree of opening of the first throttling device 3 and/or the second throttling device 6 is controlled to increase when the control condition of entering into delayed frosting is reached includes: the operating frequency of the compressor 1 is reduced to f3, the degree of opening of the first throttling device 3 is adjusted to P3, and the degree of opening of the second throttling device is adjusted to P4.

When the degree of opening of the first throttling device 3 is adjusted to P3, the degree of opening of the first throttling device 3 is increased at this moment, the amount of the refrigerant entering into the first pipe 10 and the second pipe 9 of the outdoor heat exchanger 5 is increased, in this way the heat absorption capacity of the first pipe 10 and the second pipe 9 is increased. At this moment, the heat exchange amount of the indoor heat exchanger 2 is increased, and the indoor ambient temperature rises. To keep the indoor temperature stable, the operating frequency of the compressor 1 needs to be reduced, in this way the reduction of the operating frequency of the compressor 1 fits the increase of the amount of the refrigerant of the second pipe 9 of the outdoor heat exchanger 5, and accordingly the flow rate of the refrigerant of the outdoor heat exchanger 5 is increased and the operating frequency of the compressor 1 is reduced, so that the indoor temperature is kept at the preset temperature, and comfort of a user is improved. Under the condition, the degree of opening of the second throttling device 6 is adjusted to P4.

The step that the degree of opening of the first throttling device 3 and/or the second throttling device 6 is controlled to increase when the control condition of entering into delayed frosting is reached further includes: auxiliary electric heating is started on an indoor side. When entering into the delayed frosting control, if the outdoor ambient temperature is too low, the amount of the refrigerant of the outdoor heat exchanger 5 is increased, and the operating frequency of the compressor 1 is reduced at the same time, so that only the temperature of the outdoor heat exchanger 5 is guaranteed to rise. When the operating frequency of the compressor 1 is reduced greatly and the degree of opening of the second throttle device 6 is limited, the reduction of the indoor ambient temperature is caused if heat absorption of the outdoor heat exchanger 5 does not fit the reduction of the operating frequency of the compressor 1. Therefore, the auxiliary electric heating is started on the indoor side at this moment, in this way the temperature of the indoor ambient temperature is more effectively improved in an auxiliary manner, and the indoor ambient temperature is kept constant.

The step that the degree of opening of the first throttling device 3 and/or the second throttling device 6 is controlled to increase when the control condition of entering into delayed frosting is reached further includes: the rotation speed of an indoor fan is adjusted according to a temperature of the indoor heat exchanger 2 that is acquired currently, and a current maximum allowable rotation speed of the indoor fan is set to the rotation speed of the indoor fan that is set currently during adjusting the rotation speed of the indoor fan, and a minimum rotation speed of the indoor fan is set to V1. During the delayed frosting control, heat absorption requirement of the outdoor heat exchanger 5 is reduced through reducing the heat exchanging amount of the indoor heat exchanger 2. At this moment, a requirement of the heat absorption capacity of the refrigerant is reduced. When the amount of the refrigerant is increased, needed heat absorption capacity is reduced because the heat absorption capacity is increased. Therefore, the temperature of the outdoor heat exchanger 5 is effectively improved, in this way the outdoor heat exchanger 5 defrosts, and a frosting speed of the outdoor heat exchanger 5 is delayed. The rotation speed of the indoor fan that is set currently is set to the maximum rotation speed of the indoor fan during adjustment, in this way the problem that the frosting speed is sped up because an amount of heat needed by the outdoor heat exchanger 5 is increased as a result of an error of adjusting the rotation speed of the indoor fan is effectively avoided.

The step that the degree of opening of the first throttling device 3 and/or the second throttling device 6 is controlled to increase when the control condition of entering into delayed frosting is reached further includes: the rotation speed of the outdoor fan is increased to V5. Through improving the rotation speed of the outdoor fan, heat exchange of the outdoor heat exchanger 5 and the outside are improved, heat absorption efficiency is improved, and accordingly the temperature of the outdoor heat exchanger 5 is improved, and the frosting of the outdoor heat exchanger 5 is effectively delayed.

The control method further includes a step that the delayed frosting control is exited. The step that the delayed frosting control is exited includes: the first throttling device 3 is controlled to operate according to normal heating logic, the degree of opening of the second throttling device is controlled to P5, and other components of the heat pump system are controlled to operate according to the normal heating logic. After the step that the delayed frosting control is exited, the operating frequencies, the auxiliary electric heating and the like of the indoor fan, the outdoor fan, the first throttling device 3, the second throttling device 6 and the compressor 1 of the heat pump system are controlled according to the normal heating logic, in this way the heat pump system operates in the normal heating control program, and normal heating control is realized.

The control method further includes a step that the delayed frosting control is exited. The step that the delayed frosting control is exited includes: the outdoor fan is controlled to operate according to normal heating logic after being controlled to operate for t7.

A specific control process of the heat pump system in an embodiment is as follows:
when it is judged to enter into the delayed frosting control, following the criteria defined in appended independent claim 1, the operating frequency of the compressor 1 is reduced to f3, and the degree of opening of the throttling electronic expansion valve is adjusted to P3. The auxiliary electric heating is started on the indoor side. The rotation speed of the indoor fan is adjusted according to the temperature of the indoor heat exchanger 2 that is detected currently, and the maximum rotation speed is the rotation speed that is set currently, and the minimum rotation speed is set to V1. The rotation speed of the outdoor fan is increased to V5;
when it is judged to exit the delayed frosting control, the outdoor fan is controlled according to the normal heating logic after controlling the outdoor fan to operate for t7. The throttling electronic expansion valve is controlled according to the normal heating logic. The frequency, the rotation of the indoor fan and the auxiliary electric heating are controlled according to the normal heating logic.

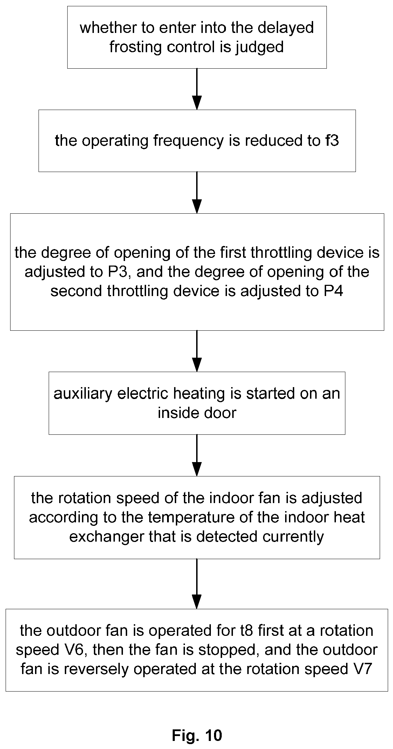

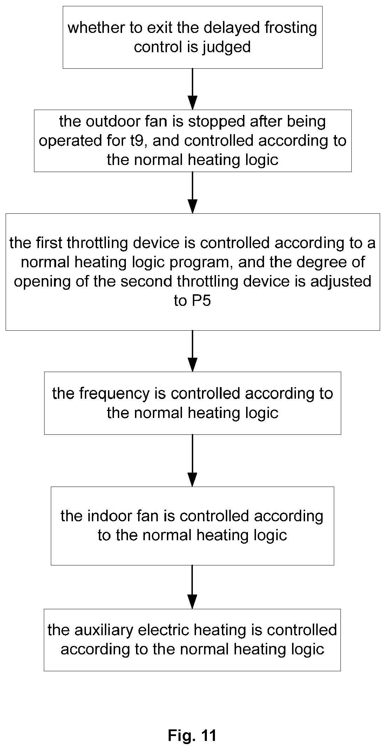

In combination with Fig. 10 and Fig. 11, in an embodiment, the step that the degree of opening of the first throttling device 3 and/or the second throttling device 6 is controlled to increase when the control condition of entering into delayed frosting is reached further includes: the outdoor fan is controlled to operate for t8 at a rotation speed V6 in the first rotation direction, the outdoor fan is stopped, and the outdoor fan is controlled to operate reversely at a rotation speed V7 in the second rotation direction.

The control method further includes a step that the delayed frosting control is exited. The step that the delayed frosting control is exited included: the outdoor fan is stopped after being controlled to operate for t9 in the second rotation direction, the outdoor fan is controlled to operate in the first rotation direction, and the outdoor fan is controlled to operate according to normal heating logic.

A specific control process of the heat pump system in an embodiment is as follows:
when it is judged to enter into the delayed frosting control, the operating frequency of the compressor 1 is reduced to f3, and the degree of opening of the throttling electronic expansion valve is adjusted to P3. The auxiliary electric heating is started on the indoor side. The rotation speed of the indoor fan is adjusted according to the temperature of the indoor heat exchanger 2 that is detected currently, and the maximum rotation speed is the rotation speed that is set currently, the minimum rotation speed is set to V1. The outdoor fan is operated first at a rotation speed V6 and stopped after being operated for t8, and the outdoor fan is reversely operated at a rotation speed V7;
when it is judged to exit the delayed frosting control, the outdoor fan is stopped after being operated for t9, then the outdoor fan is controlled according to the normal heating logic. The throttling electronic expansion valve is controlled according to a normal heating program. The frequency, the revolving of the indoor fan and the auxiliary electric heating are controlled according to the normal heating logic.

In other embodiments, the delayed frosting control is implemented while the degree of opening of the first throttling device 3 and the second throttling device 6 is increased, as to increase a flow rate of the outdoor heat exchanger 5, in this way the heat absorption capacity of the outdoor heat exchanger 5 is improved, and the frosting period of the outdoor heat exchanger is delayed.

In the abovementioned embodiments, T1 is at 0~10°C, T2 is at-10~0°C, T3 is at 0~5°C, T1 >T2, and T3>T2;
t1 is 10∼60min, t2 is 0~10min, t3 is 0~10min, t4 is 0~10min, t5 is 0~10min, t6 is 0~10min, t7 is 0~10min, t8 is 0~10min, and t9 is 0~10min;
P1 is 0∼500P, P2 is 0∼100P, P3 is 0∼500P, P4 is 0∼500P, and P5 is 0∼100P;
V1 is 0~800rpm, V2 is 300∼900rpm, V3 is 300∼900rpm, V4 is 300∼900rpm, V5 is 300∼900rpm, V6 is 300∼900rpm, and V7 is 300∼900rpm;
f1 is 10~70Hz, f2 is 10~70Hz, f3 is 10~70Hz, f1≥f2, and f1≥f3;

The abovementioned embodiments, when the outdoor temperature is greater than 0°C, and when it is judged that there is the frost layer attached to the outdoor heat exchanger 5, the operating frequency is reduced, the rotation speed of the outdoor fan is improved, the indoor fan is operated at a low speed, the auxiliary electric heating is started on the indoor side, and the bypass electronic expansion valve is opened with a certain degree of opening, in this way the refrigerant synchronously flows through the second pipe and the first pipe of an outdoor unit, and an evaporating temperature of the outdoor heat exchanger 5 is improved. In addition, the frost layer is melted with heat of outdoor air, and the melted water is blown off the outdoor heat exchanger 5. When the frost layer is melted, the normal heating control is resumed. With adoption of the control method, the frosting is delayed, the frosting period is prolonged, and the continuous heating and comfortable operation of a heat pump air conditioner is realized. With the adoption of the control method of the invention as defined by appended independent claim 1, a frosting period of the heat pump system is prolonged for 50% or above.

The above is only the optional embodiment of the invention and not intended to limit the scope of protection of the invention, which is solely defined by appended independent claim 1.

## Claims

1. A control method of a heat pump system, wherein the heat pump system comprises a compressor (1), an indoor heat exchanger (2), a first throttling device (3), a second throttling device (6), a bypass pipe (4), an outdoor heat exchanger (5), a second pipe (9), a first pipe (10), and main flow path, the second pipe (9) is connected to the indoor heat exchanger (2) through the bypass pipe (4), the first pipe (10) is connected to the indoor heat exchanger (2) through the main flow path, the first throttling device (3) is arranged on the main flow path between the first pipe (10) and the indoor heat exchanger (2), the second throttling device (6) is arranged on the bypass pipe (4), an first pipe (10) flow path is formed by the first pipe (10) and the main flow path, the first pipe (10) flow path is in parallel connection with the bypass pipe (4) and then in serial connection with the second pipe (9); the control method comprises:
acquiring operating parameters of the heat pump system;
judging whether a control condition of entering into delayed frosting is reached; and
controlling to increase a degree of opening of the first throttling device (3) and/or the second throttling device (6) when the control condition of entering into delayed frosting is reached,
the outdoor heat exchanger (5) comprises the first pipe (10) close to an air inlet side and the second pipe (9) far away from the air inlet side,
the control condition of entering into delayed frosting comprises:
1) an outdoor ambient temperature is greater than or equal to 0°C, and less than or equal to T1;
2) a temperature of the outdoor heat exchanger (5) is less than or equal to T2; and
3) a current operating frequency of the compressor (1) is greater than or equal to f1.

2. The control method according to claim 1, wherein controlling to increase the degree of opening of the first throttling device (3) and/or the second throttling device (6) when the control condition of entering into delayed frosting is reached comprises:
reducing an operating frequency of the compressor (1) to f2;
adjusting the degree of opening of the second throttling device (6) to P1; and
keeping the degree of opening of the first throttling device (3) unchanged.

3. The control method according to claim 1, wherein controlling to increase the degree of opening of the first throttling device (3) and/or the second throttling device (6) when the control condition of entering into delayed frosting is reached comprises:
reducing the operating frequency of the compressor (1) to f3;
adjusting the degree of opening of the first throttling device (3) to P3; and
adjusting the degree of opening of the second throttling device (6) to P4.

4. The control method according to claim 2 or 3, wherein the heat pump system further comprises an indoor fan; controlling to increase the degree of opening of the first throttling device (3) and/or the second throttling device (6) when the control condition of entering into delayed frosting is reached further comprises: starting auxiliary electric heating on an indoor side; or
controlling to increase the degree of opening of the first throttling device (3) and/or the second throttling device (6) when the control condition of entering into delayed frosting is reached further comprises:
adjusting a rotation speed of the indoor fan according to a temperature of the indoor heat exchanger (2) that is acquired currently; and
setting a current maximum allowable rotation speed of the indoor fan to a rotation speed of the indoor fan that is set currently during adjusting the rotation speed of the indoor fan, and setting a minimum rotation speed of the indoor fan to V1.

5. The control method according to claim 2, wherein the heat pump system further comprises an outdoor fan; controlling to increase the degree of opening of the first throttling device (3) and/or the second throttling device (6) when the control condition of entering into delayed frosting is reached further comprises: increasing a rotation speed of the outdoor fan to V2; or
controlling to increase the degree of opening of the first throttling device (3) and/or the second throttling device (6) when the control condition of entering into delayed frosting is reached further comprises:
controlling an outdoor fan to operate for t5 at a rotation speed V3 in a first rotation direction;
stopping the outdoor fan; and
controlling the outdoor fan to operate reversely at a rotation speed V4 in a second rotation direction.

6. The control method according to claim 3, wherein controlling to increase the degree of opening of the first throttling device (3) and/or the second throttling device (6) when the control condition of entering into delayed frosting is reached further comprises: increasing the rotation speed of the outdoor fan to V5, or
controlling to increase the degree of opening of the first throttling device (3) and/or the second throttling device (6) when the control condition of entering into delayed frosting is reached further comprises:
controlling an outdoor fan to operate for t8 at a rotation speed V6 in the first rotation direction;
stopping the outdoor fan; and
controlling the outdoor fan to operate reversely at a rotation speed V7 in the second rotation direction.

7. The control method according to claim 1 wherein the control method further comprises:
detecting whether a condition of exiting delayed frosting control is satisfied; and
controlling the heat pump system to exit the delayed frosting control in a case that the condition of exiting delayed frosting control is satisfied.

8. The control method according to claim 7, wherein the condition of exiting delayed frosting control comprises one of the following:
a temperature of the outdoor heat exchanger (5) is greater than or equal to T3; and
a period of time of the delayed frosting control is greater than or equal to t2.

9. The control method according to claim 2, wherein the control method further comprises: exiting the delayed frosting control; and exiting the delayed frosting control comprises:
controlling to adjust the degree of opening of the second throttling device (6) to P2;
controlling to keep a current degree of opening of the first throttling device (3) unchanged; and
controlling the heat pump system after t4 to operate according to normal heating logic.

10. The control method according to claim 5, wherein the control method further comprises: exiting the delayed frosting control; and exiting the delayed frosting control comprises: controlling the outdoor fan operate according to normal heating logic after controlling the outdoor fan to operate for t3; or
exiting the delayed frosting control comprises:
controlling the outdoor fan to operate for t6 in the second rotation direction, and stopping the outdoor fan; and
controlling the outdoor fan to operate in the first rotation direction, and controlling the outdoor fan to operate according to normal heating logic.

11. The control method according to claim 3, wherein the control method further comprises: exiting the delayed frosting control; and exiting the delayed frosting control comprises:
controlling the first throttling device (3) to operate according to normal heating logic; and
controlling the degree of opening of the second throttling device (6) to P5.

12. The control method according to claim 6, wherein the control method further comprises: exiting the delayed frosting control; and exiting the delayed frosting control comprises:
controlling the outdoor fan to operate according to normal heating logic after controlling the outdoor fan to operate for t7.

13. The control method according to claim 6, wherein the control method further comprises: exiting the delayed frosting control; and exiting the delayed frosting control comprises:
controlling the outdoor fan to operate for t9 in the second rotation direction, and stopping the outdoor fan; and
controlling the outdoor fan to operate in the first rotation direction, and controlling the outdoor fan to operate according to normal heating logic.

14. The control method according to claim 1, wherein the control condition of entering into delayed frosting further comprises:
continuous heating operating time is greater than or equal to t1.

## Patentansprüche

1. Verfahren zur Steuerung einer Wärmepumpenanlage, wobei die Wärmepumpenanlage einen Kompressor (1), einen Innenwärmetauscher (2), eine erste Drosselvorrichtung (3), eine zweite Drosselvorrichtung (6), eine Bypass-Leitung (4), einen Außenwärmetauscher (5), eine zweite Leitung (9), eine erste Leitung (10) und einen Hauptströmungsweg umfasst, wobei die zweite Leitung (9) über die Bypass-Leitung (4) mit dem Innenwärmetauscher (2) verbunden ist, die erste Leitung (10) über den Hauptströmungsweg mit dem Innenwärmetauscher (2) verbunden ist, die erste Drosselvorrichtung (3) an dem Hauptströmungsweg zwischen der ersten Leitung (10) und dem Innenwärmetauscher (2) angeordnet ist, die zweite Drosselvorrichtung (6) an der Bypass-Leitung (4) angeordnet ist, ein Strömungsweg der ersten Leitung (10) durch die erste Leitung (10) und den Hauptströmungsweg gebildet wird, der Strömungsweg der ersten Leitung (10) parallel mit der Bypass-Leitung (4) geschaltet und dann in Reihe mit der zweiten Leitung (9) geschaltet ist; wobei das Steuerungsverfahren Folgendes umfasst:
Erfassen von Betriebsparametern der Wärmepumpenanlage;
Beurteilen, ob eine Steuerungsbedingung für das Eintreten in ein verzögertes Vereisen erreicht ist; und
Steuern zum Erhöhen eines Öffnungsgrads der ersten Drosselvorrichtung (3) und/oder der zweiten Drosselvorrichtung (6), wenn die Steuerungsbedingung für das Eintreten in ein verzögertes Vereisen erreicht ist,
wobei der Außenwärmetauscher (5) die erste Leitung (10) nahe einer Lufteinlassseite und die zweite Leitung (9) weit entfernt von der Lufteinlassseite umfasst,
wobei die Steuerungsbedingung für das Eintreten in ein verzögertes Vereisen Folgendes umfasst:
1) eine Außenumgebungstemperatur ist höher oder gleich 0 °C und kleiner oder gleich T1;
2) eine Temperatur des Außenwärmetauschers (5) ist niedriger oder gleich T2; und
3) eine aktuelle Betriebsfrequenz des Kompressors (1) ist höher oder gleich f1.

2. Steuerungsverfahren nach Anspruch 1, wobei das Steuern zum Erhöhen des Öffnungsgrads der ersten Drosselvorrichtung (3) und/oder der zweiten Drosselvorrichtung (6), wenn die Steuerungsbedingung für das Eintreten in ein verzögertes Vereisen erreicht ist, Folgendes umfasst:
Reduzieren einer Betriebsfrequenz des Kompressors (1) auf f2;
Einstellen des Öffnungsgrads der zweiten Drosselvorrichtung (6) auf P1; und
Unveränderthalten des Öffnungsgrades der ersten Drosselvorrichtung (3).

3. Steuerungsverfahren nach Anspruch 1, wobei das Steuern zum Erhöhen des Öffnungsgrads der ersten Drosselvorrichtung (3) und/oder der zweiten Drosselvorrichtung (6), wenn die Steuerungsbedingung für das Eintreten in ein verzögertes Vereisen erreicht ist, Folgendes umfasst:
Reduzieren der Betriebsfrequenz des Kompressors (1) auf f3;
Einstellen des Öffnungsgrads der ersten Drosselvorrichtung (3) auf P3; und
Einstellen des Öffnungsgrads der zweiten Drosselvorrichtung (6) auf P4.

4. Steuerungsverfahren nach Anspruch 2 oder 3, wobei die Wärmepumpenanlage ferner einen Innenventilator umfasst; wobei das Steuern zum Erhöhen des Öffnungsgrads der ersten Drosselvorrichtung (3) und/oder der zweiten Drosselvorrichtung (6), wenn die Steuerungsbedingung für das Eintreten in ein verzögertes Vereisen erreicht ist, ferner Folgendes umfasst: Starten einer elektrischen Zusatzheizung auf einer Innenseite; oder
das Steuern zum Erhöhen des Öffnungsgrads der ersten Drosselvorrichtung (3) und/oder der zweiten Drosselvorrichtung (6), wenn die Steuerungsbedingung für das Eintreten in ein verzögertes Vereisen erreicht ist, ferner Folgendes umfasst:
Einstellen einer Drehzahl des Innenventilators gemäß einer Temperatur des Innenwärmetauschers (2), die aktuell erfasst wird; und
Festlegen einer aktuell maximal zulässigen Drehzahl des Innenventilators auf eine Drehzahl des Innenventilators, die aktuell während des Einstellens der Drehzahl des Innenventilators festgelegt wird, und Festlegen einer minimalen Drehzahl des Innenventilators auf V1.

5. Steuerungsverfahren nach Anspruch 2, wobei die Wärmepumpenanlage ferner einen Außenventilator umfasst; wobei das Steuern zum Erhöhen des Öffnungsgrads der ersten Drosselvorrichtung (3) und/oder der zweiten Drosselvorrichtung (6), wenn die Steuerungsbedingung für das Eintreten in ein verzögertes Vereisen erreicht ist, ferner Folgendes umfasst: Erhöhen einer Drehzahl des Außenventilators auf V2; oder
das Steuern zum Erhöhen des Öffnungsgrads der ersten Drosselvorrichtung (3) und/oder der zweiten Drosselvorrichtung (6), wenn die Steuerungsbedingung für das Eintreten in ein verzögertes Vereisen erreicht ist, ferner Folgendes umfasst:
Steuern eines Außenventilators zum Betrieb für t5 mit einer Drehzahl V3 in einer ersten Drehrichtung;
Stoppen des Außenventilators; und
Steuern des Außenventilators zum Betrieb in umgekehrter Richtung mit einer Drehzahl V4 in einer zweiten Drehrichtung.

6. Steuerungsverfahren nach Anspruch 3, wobei das Steuern zum Erhöhen des Öffnungsgrads der ersten Drosselvorrichtung (3) und/oder der zweiten Drosselvorrichtung (6), wenn die Steuerungsbedingung für das Eintreten in ein verzögertes Vereisen erreicht ist, ferner Folgendes umfasst: Erhöhen der Drehzahl des Außenventilators auf V5, oder
das Steuern zum Erhöhen des Öffnungsgrads der ersten Drosselvorrichtung (3) und/oder der zweiten Drosselvorrichtung (6), wenn die Steuerungsbedingung für das Eintreten in ein verzögertes Vereisen erreicht ist, ferner Folgendes umfasst:
Steuern eines Außenventilators zum Betrieb für t8 mit einer Drehzahl V6 in der ersten Drehrichtung;
Stoppen des Außenventilators; und
Steuern des Außenventilators zum Betrieb in umgekehrter Richtung mit einer Drehzahl V7 in der zweiten Drehrichtung.

7. Steuerungsverfahren nach Anspruch 1, wobei das Steuerungsverfahren ferner Folgendes umfasst:
Erkennen, ob eine Bedingung für das Verlassen der Steuerung der verzögerten Vereisung erfüllt ist; und
Steuern der Wärmepumpenanlage zum Verlassen der Steuerung der verzögerten Vereisung, wenn die Bedingung für das Verlassen der Steuerung der verzögerten Vereisung erfüllt ist.

8. Steuerungsverfahren nach Anspruch 7, wobei die Bedingung für das Verlassen der Steuerung der verzögerten Vereisung eines von Folgendem umfasst:
eine Temperatur des Außenwärmetauschers (5) ist höher oder gleich T3; und
eine Zeitspanne der Steuerung der verzögerten Vereisung ist größer oder gleich t2.

9. Steuerungsverfahren nach Anspruch 2, wobei das Steuerungsverfahren ferner Folgendes umfasst: Verlassen der Steuerung der verzögerten Vereisung; und das Verlassen der Steuerung der verzögerten Vereisung Folgendes umfasst:
Steuern zum Einstellen des Öffnungsgrads der zweiten Drosselvorrichtung (6) auf P2;
Steuern zum Unveränderthalten eines aktuellen Öffnungsgrads der ersten Drosselvorrichtung (3); und
Steuern der Wärmepumpenanlage nach t4 zum Betrieb gemäß der normalen Heizlogik.

10. Steuerungsverfahren nach Anspruch 5, wobei das Steuerungsverfahren ferner Folgendes umfasst: Verlassen der Steuerung der verzögerten Vereisung; und das Verlassen der Steuerung der verzögerten Vereisung Folgendes umfasst: Steuern des Außenventilators zum Betrieb gemäß der normalen Heizlogik nach dem Steuern des Außenventilators zum Betrieb für t3; oder
das Verlassen der Steuerung der verzögerten Vereisung Folgendes umfasst:
Steuern des Außenventilators zum Betrieb für t6 in der zweiten Drehrichtung und Stoppen des Außenventilators; und
Steuern des Außenventilators zum Betrieb in der ersten Drehrichtung und Steuern des Außenventilators zum Betrieb gemäß der normalen Heizlogik.

11. Steuerungsverfahren nach Anspruch 3, wobei das Steuerungsverfahren ferner Folgendes umfasst: Verlassen der Steuerung der verzögerten Vereisung; und das Verlassen der Steuerung der verzögerten Vereisung Folgendes umfasst:
Steuern der ersten Drosselvorrichtung (3) zum Betrieb gemäß der normalen Heizlogik; und
Steuern des Öffnungsgrads der zweiten Drosselvorrichtung (6) auf P5.

12. Steuerungsverfahren nach Anspruch 6, wobei das Steuerungsverfahren ferner Folgendes umfasst: Verlassen der Steuerung der verzögerten Vereisung; und das Verlassen der Steuerung der verzögerten Vereisung Folgendes umfasst:
Steuern des Außenventilators zum Betrieb gemäß der normalen Heizlogik nach dem Steuern des Außenventilators zum Betrieb für t7.

13. Steuerungsverfahren nach Anspruch 6, wobei das Steuerungsverfahren ferner Folgendes umfasst: Verlassen der Steuerung der verzögerten Vereisung; und das Verlassen der Steuerung der verzögerten Vereisung Folgendes umfasst:
Steuern des Außenventilators zum Betrieb für t9 in der zweiten Drehrichtung und Stoppen des Außenventilators; und
Steuern des Außenventilators zum Betrieb in der ersten Drehrichtung und Steuern des Außenventilators zum Betrieb gemäß der normalen Heizlogik.

14. Steuerungsverfahren nach Anspruch 1, wobei die Steuerungsbedingung für das Eintreten in ein verzögertes Vereisen ferner Folgendes umfasst:
die kontinuierliche Heizbetriebszeit ist größer oder gleich t1.

## Revendications

1. Procédé de commande pour système de pompe à chaleur, dans lequel le système de pompe à chaleur comprend un compresseur (1), un échangeur de chaleur intérieur (2), un premier dispositif d'étranglement (3), un second dispositif d'étranglement (6), un tuyau de dérivation (4), un échangeur de chaleur extérieur (5), un second tuyau (9), un premier tuyau (10) et un chemin d'écoulement principal, le second tuyau (9) est relié à l'échangeur de chaleur intérieur (2) par le biais du tuyau de dérivation (4), le premier tuyau (10) est relié à l'échangeur de chaleur intérieur (2) par le biais du chemin d'écoulement principal, le premier dispositif d'étranglement (3) est agencé sur le chemin d'écoulement principal entre le premier tuyau (10) et l'échangeur de chaleur intérieur (2), le second dispositif d'étranglement (6) est agencé sur le tuyau de dérivation (4), un premier chemin d'écoulement de tuyau (10) est formé par le premier tuyau (10) et le chemin d'écoulement principal, le premier chemin d'écoulement de tuyau (10) est en connexion parallèle avec le tuyau de dérivation (4) puis en connexion en série avec le second tuyau (9) ; le procédé de commande comprend :
l'acquisition de paramètres de fonctionnement du système de pompe à chaleur ;
la détermination du fait de savoir si une condition de commande d'entrée en givrage retardé est atteinte ; et
la commande pour augmenter un degré d'ouverture du premier dispositif d'étranglement (3) et/ou du second dispositif d'étranglement (6) lorsque la condition de commande d'entrée en givrage retardé est atteinte,
l'échangeur de chaleur extérieur (5) comprend le premier tuyau (10) proche d'un côté entrée d'air et le second tuyau (9) éloigné du côté entrée d'air,
la condition de commande d'entrée en givrage retardé comprend :
1) une température ambiante extérieure est supérieure ou égale à 0 C, et inférieure ou égale à T1 ;
2) une température de l'échangeur de chaleur extérieur (5) est inférieure ou égale à T2 ; et
3) une fréquence de fonctionnement actuelle du compresseur (1) est supérieure ou égale à f1.

2. Procédé de commande selon la revendication 1, dans lequel la commande pour augmenter le degré d'ouverture du premier dispositif d'étranglement (3) et/ou du second dispositif d'étranglement (6) lorsque la condition de commande d'entrée en givrage retardé est atteinte comprend :
la réduction d'une fréquence de fonctionnement du compresseur (1) à f2 ;
l'ajustement du degré d'ouverture du second dispositif d'étranglement (6) à P1 ; et
le maintien, sans changement, du degré d'ouverture du premier dispositif d'étranglement (3).

3. Procédé de commande selon la revendication 1, dans lequel la commande pour augmenter le degré d'ouverture du premier dispositif d'étranglement (3) et/ou du second dispositif d'étranglement (6) lorsque la condition de commande d'entrée en givrage retardé est atteinte comprend :
la réduction de la fréquence de fonctionnement du compresseur (1) à f3 ;
l'ajustement du degré d'ouverture du premier dispositif d'étranglement (3) à P3 ; et
l'ajustement du degré d'ouverture du second dispositif d'étranglement (6) à P4.

4. Procédé de commande selon la revendication 2 ou 3, dans lequel le système de pompe à chaleur comprend également un ventilateur intérieur ; la commande pour augmenter le degré d'ouverture du premier dispositif d'étranglement (3) et/ou du second dispositif d'étranglement (6) lorsque la condition de commande d'entrée en givrage retardé est atteinte comprend également : le démarrage d'un chauffage électrique auxiliaire sur un côté intérieur ; ou
la commande pour augmenter le degré d'ouverture du premier dispositif d'étranglement (3) et/ou du second dispositif d'étranglement (6) lorsque la condition de commande d'entrée en givrage retardé est atteinte comprend également :
l'ajustement d'une vitesse de rotation du ventilateur intérieur selon une température de l'échangeur de chaleur intérieur (2) qui est actuellement acquise ; et
le réglage d'une vitesse de rotation maximale autorisée actuelle du ventilateur intérieur sur une vitesse de rotation du ventilateur intérieur qui est réglée actuellement pendant l'ajustement de la vitesse de rotation du ventilateur intérieur, et le réglage d'une vitesse de rotation minimale du ventilateur intérieur à V1.

5. Procédé de commande selon la revendication 2, dans lequel le système de pompe à chaleur comprend également un ventilateur extérieur ; la commande pour augmenter le degré d'ouverture du premier dispositif d'étranglement (3) et/ou du second dispositif d'étranglement (6) lorsque la condition de commande d'entrée en givrage retardé est atteinte comprend également : l'augmentation d'une vitesse de rotation du ventilateur extérieur à V2 ; ou
la commande pour augmenter le degré d'ouverture du premier dispositif d'étranglement (3) et/ou du second dispositif d'étranglement (6) lorsque la condition de commande d'entrée en givrage retardé est atteinte comprend également :
la commande d'un ventilateur extérieur pour qu'il fonctionne pendant t5 à une vitesse de rotation V3 dans un premier sens de rotation ;
l'arrêt du ventilateur extérieur ; et
la commande du ventilateur extérieur pour qu'il fonctionne en sens inverse à une vitesse de rotation V4 dans un second sens de rotation.

6. Procédé de commande selon la revendication 3, dans lequel la commande pour augmenter le degré d'ouverture du premier dispositif d'étranglement (3) et/ou du second dispositif d'étranglement (6) lorsque la condition de commande d'entrée en givrage retardé est atteinte comprend également : l'augmentation de la vitesse de rotation du ventilateur extérieur à V5, ou
la commande pour augmenter le degré d'ouverture du premier dispositif d'étranglement (3) et/ou du second dispositif d'étranglement (6) lorsque la condition de commande d'entrée en givrage retardé est atteinte comprend également :
la commande d'un ventilateur extérieur pour qu'il fonctionne pendant t8 à une vitesse de rotation V6 dans le premier sens de rotation ;
l'arrêt du ventilateur extérieur ; et
la commande du ventilateur extérieur pour qu'il fonctionne en sens inverse à une vitesse de rotation V7 dans le second sens de rotation.

7. Procédé de commande selon la revendication 1, dans lequel le procédé de commande comprend également :
la détermination du fait de savoir si une condition de sortie d'une commande de givrage retardé est satisfaite ; et
la commande du système de pompe à chaleur pour sortir de la commande de givrage retardé dans le cas où la condition de sortie de la commande de givrage retardé est satisfaite.

8. Procédé de commande selon la revendication 7, dans lequel la condition de sortie de la commande de givrage retardé comprend l'une des conditions suivantes :
une température de l'échangeur de chaleur extérieur (5) est supérieure ou égale à T3 ; et
une durée de commande de givrage retardé est supérieure ou égale à t2.

9. Procédé de commande selon la revendication 2, dans lequel le procédé de commande comprend également : la sortie de la commande de givrage retardé ; et la sortie de la commande de givrage retardé comprend :
la commande pour ajuster le degré d'ouverture du second dispositif d'étranglement (6) à P2 ;
la commande pour maintenir inchangé un degré actuel d'ouverture du premier dispositif d'étranglement (3) ; et
la commande du système de pompe à chaleur après t4 pour qu'il fonctionne selon une logique de chauffage normale.

10. Procédé de commande selon la revendication 5, dans lequel le procédé de commande comprend également : la sortie de la commande de givrage retardé ; et la sortie de la commande de givrage retardé comprend : la commande du fonctionnement du ventilateur extérieur selon une logique de chauffage normale après la commande du fonctionnement du ventilateur extérieur pendant t3 ; ou
la sortie de la commande de givrage retardé comprend :
la commande du ventilateur extérieur pour qu'il fonctionne pendant t6 dans le second sens de rotation, et l'arrêt du ventilateur extérieur ; et
la commande du ventilateur extérieur pour qu'il fonctionne dans le premier sens de rotation, et la commande du ventilateur extérieur pour qu'il fonctionne selon une logique de chauffage normale.

11. Procédé de commande selon la revendication 3, dans lequel le procédé de commande comprend également : la sortie de la commande de givrage retardé ; et la sortie de la commande de givrage retardé comprend :
la commande du premier dispositif d'étranglement (3) pour qu'il fonctionne selon une logique de chauffage normale ; et
la commande du degré d'ouverture du second dispositif d'étranglement (6) à P5.

12. Procédé de commande selon la revendication 6, dans lequel le procédé de commande comprend également : la sortie de la commande de givrage retardé ; et la sortie de la commande de givrage retardé comprend :
la commande du ventilateur extérieur pour qu'il fonctionne selon une logique de chauffage normale après la commande du fonctionnement du ventilateur extérieur pendant t7.

13. Procédé de commande selon la revendication 6, dans lequel le procédé de commande comprend également : la sortie de la commande de givrage retardé ; et la sortie de la commande de givrage retardé comprend :
la commande du ventilateur extérieur pour qu'il fonctionne pendant t9 dans le second sens de rotation, et l'arrêt du ventilateur extérieur ; et
la commande du ventilateur extérieur pour qu'il fonctionne dans le premier sens de rotation, et la commande du ventilateur extérieur pour qu'il fonctionne selon une logique de chauffage normale.

14. Procédé de commande selon la revendication 1, dans lequel la condition de commande d'entrée en givrage retardé comprend également :
la durée de fonctionnement en chauffage continu est supérieure ou égale à t1.
